(19) Europäisches Patentamt
European Patent Office
Office européen des brevets

(11) **EP 3 114 385 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **15723552.4**

(22) Anmeldetag: **05.03.2015**

(51) Int Cl.:
*F16L 59/065* (2006.01)     *E04B 1/80* (2006.01)

(86) Internationale Anmeldenummer:
**PCT/IB2015/000282**

(87) Internationale Veröffentlichungsnummer:
**WO 2015/132652 (11.09.2015 Gazette 2015/36)**

(54) **FOLIENUMHÜLLTER VAKUUMDÄMMKÖRPER**

FILM-ENCAPSULATED VACUUM INSULATION BODY

CORPS D'ISOLATION SOUS VIDE ENTOURÉ D'UN FILM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2014 DE 102014002957**

(43) Veröffentlichungstag der Anmeldung:
**11.01.2017 Patentblatt 2017/02**

(73) Patentinhaber: **va-Q-tec AG**
**97080 Würzburg (DE)**

(72) Erfinder: **CAPS, Roland**
**63839 Kleinwallstadt (DE)**

(74) Vertreter: **Küchler, Stefan**
**Patentanwalt**
**Färberstrasse 20**
**90402 Nürnberg (DE)**

(56) Entgegenhaltungen:
**DE-A1-102010 019 074     US-A1- 2008 095 970**

## Beschreibung

Die Erfindung richtet sich auf einen folienumhüllten Vakuumdämmkörper, umfassend einen Kern und eine den Kern umgebende, aus mehreren Schichten bestehende luftundurchlässige Hüllfolie, wobei auf einem Trägermaterial eine dünne Schicht aus Aluminium als Barriereschicht aufgedampft ist, welche mit einer Schutzschicht abgedeckt ist, und sich auf der Unterseite der Trägerschicht eine niedrigschmelzende Siegelschicht aus Polyethylen befindet, wobei zwischen dem Kern und der Hüllfolie zumindest bereichsweise ein textiles Erzeugnis, insbesondere ein Vlies, und/oder ein textiles Flächengebilde, insbesondere ein Vliesstoff, eingefügt ist, wobei die Fasern des textilen Erzeugnisses und/oder des textilen Flächengebildes wenigstens zwei Komponenten aufweisen, welche aus unterschiedlichen Materialien bestehen, aber miteinander verbunden sind, und wobei die beiden Komponenten der Fasern konzentrisch ineinander angeordnet sind, nämlich in Form einer inneren Seele einerseits und einem diese außen umgebenden Mantel aus einem Polymer-Material andererseits.

Derartige Vakuumdämmkörper dienen primär als thermische Isolation, beispielsweise an Gebäudefassaden, in Warmhalteboxen, Kühl- oder Gefriergeräten, etc.

Dabei verfügt das Kernmaterial über offene, d.h. miteinander kommunizierende Poren. Während der Herstellung wird in diesen Poren ein Vakuum erzeugt, so dass innerhalb dieser Poren die Wärme mangels eines Transportmediums weder durch Wärmeleitung noch durch Wärmekonvektion transportiert werden kann. Daraus folgt der für Vakuumisolationspaneele oder -körper typische, hohe Wärmedämmwert. Infolgedessen kann bei solchen Vakuumisolationspaneelen die Dicke gegenüber anderen Dämmkörpern drastisch reduziert werden.

Ein Nachteil der dabei verwendeten porösen Kernmaterialien ist darin begründet, dass während des Evakuierens lose Partikel des Kerns mitgerissen oder gar nicht völlig fest sitzende Partikel unmittelbar aus dem Kern losgerissen werden können; dies Partikel können sodann entweder in die Bereiche der späteren Siegelnähte vordringen und diese verunreinigen und damit eine effiziente, d.h. druckdichte Versiegelung erschweren oder gar unmöglich machen; außerdem könnten sie in eine Evakuierungspumpe geraten und diese zerstören oder zumindest beeinträchtigen.

Als Gegenmaßnahme ist bereits vorgeschlagen worden, den Kern in ein Vlies einzuhüllen, dessen Zweck darin gesehen wird, lose Partikel des Kerns zurückzuhalten, so dass diese nicht mitgerissen werden können. Aus mechanischen Gründen werden für ein derartiges Vlies Materialien verwendet, welche eine ausreichende Festigkeit aufweisen. Da sie ihre Festigkeit auch durch einen Siegelvorgang nicht verlieren sollen, handelt es sich dabei im Allgemeinen um Materialien mit einem vergleichsweise hohen Schmelzpunkt.

Gerade dieser Umstand ist allerdings mit Nachteilen behaftet. Denn bei den meisten Herstellungsverfahren ist nicht auszuschließen, dass derartige Vliese direkt in den Bereich einer Siegelnaht gelangen können. Dabei können sich solche Fasern mit den angrenzenden Siegelschichten nicht verbinden und verhindern dadurch eine effiziente Versiegelung oder erschweren dieselbe zumindest, da sie die eigentlichen Siegelschichten auf einem gegenseitigen Abstand halten, so dass diese nach einem Siegelschritt nicht zu einer gemeinsamen Matrix erstarren, wie dies für eine vakuumdichte Versiegelung unerlässlich wäre.

Beispielsweise offenbart die US 2008 / 0 095 970 A1 ein Vakuumisolationspaneel, welches wenigstens einen plattenförmigen Kern umfasst sowie eine jenen außen umgebende Umhüllung, welche den Kern unter einem stark verminderten Druck beherbergt. Als Kern dient ein plattenförmiges Faseraggregat, welches eine Polyesterfaser mit einer Fasergröße von 1 bis 6 Denier in einer Menge von 50 Gew.-% oder mehr aufweist. Zwar kann ein solcher Kern als offenporig bezeichnet werden, weil zwischen den Fasern Hohlräume verbleiben, in welchen ein Vakuum erzeugt werden kann; nur bei der dort beschriebenen dritten Ausführungsform wird vorgeschlagen, zwei ineinander geschachtelte Umhüllungen zu verwenden, wobei die innere Umhüllung aus einem Polyester besteht, die äußere Umhüllung hat dagegen eine vierlagige Struktur mit - von außen nach innen - den Schichten: Nylon, Polyethylenterephthalat, Aluminiumfolie, hochdichtes Polyethylen. Dabei werden die beiden einander zugewandten Oberflächen der beiden Umhüllungen miteinander verschweißt; in dieser Verschweißungsebene trifft also ein Polyestermaterial auf ein hochdichtes Polyethylenmaterial. Naturgemäß bereitet das Verschweißen derart unterschiedlicher Materialien jedoch Schwierigkeiten.

Aus den Nachteilen des beschriebenen Standes der Technik resultiert das die Erfindung initiierende Problem, einen gattungsgemäßen, folienumhüllten Vakuumdämmkörper derart weiterzubilden, dass eine optimale Versiegelung der Umhüllungsfolie gewährleistet ist, sowohl im Hinblick auf potentielle, mitgerissene Partikel des Kernmaterials, als auch hinsichtlich absichtlich oder versehentlich in eine solche Siegelschicht hinein geratender textiler Erzeugnisse, insbesondere textiler Flächengebilde wie Vliese oder Vliesstoffe.

Die Lösung dieses Problems gelingt dadurch, dass die Summenformel des Monomers oder der Wiederholeinheit des Polymer-Materials für den Mantel der Faser des zwischen Kern und Hüllfolie eingefügten textilen Erzeugnisses mit der Summenformel des Monomers oder der Wiederholeinheit des Polymer-Materials der Siegelschicht der Hüllfolie übereinstimmt.

Durch Verwendung zweier getrennter Materialien ist es möglich, zwei an und für sich konkurrierende Ziele gemeinsam zu erreichen: Zum Einen kann ein festes Material verwendet werden, welches bei dem Siegelvorgang nicht schmilzt und also seine Festigkeit auch während des Versiegelns nicht verliert, und andererseits ein Material, welches sich bei Bedarf mit einer angrenzenden Siegelschicht verbinden kann und also eine Brücke zwischen zwei Siegelschichten ausbilden kann.

Indem die beiden Komponenten der Fasern konzentrisch ineinander angeordnet sind, ergibt sich eine Geometrie, welche definiert Verhältnisse schafft und damit eine lückenlose Verbindung beider Komponenten über die gesamte Länge einer Faser sicherstellt.

Da eine Komponente an ihrem äußeren Mantel von einer anderen Komponente vollständig umgeben ist, so ist die innere Komponente einfach zusammenhängend, die äußere Komponente zweifach zusammenhängend. Die beiden Komponenten können sich daher nicht zerstörungsfrei voneinander lösen. Dies ist vergleichbar zur Rinde eines Baumstammes, die sich auch nicht zerstörungsfrei vom inneren Kernholz lösen lässt.

Es liegt im Rahmen der Erfindung, dass eine oder beide Komponenten aus einem natürlichen oder synthetischen Polymer bestehen. Solche Materialien lassen sich an die verschiedensten Anforderungen anpassen, insbesondere hinsichtlich Festigkeit, Flexibilität, Elastizität, Schmelzpunkt, etc. Solche Materialien sind mit moderatem Aufwand herstellbar. Als natürliches Polymer kommt hierbei Zellulose in Betracht, die in Viskose enthalten ist und in Baumwolle, ferner das Protein Fibroin, welches in der Seide enthalten ist, oder Keratin als Bestandteil von Wolle, etc. Synthetische Polymere sind kettenförmige Kohlenwasserstoffe, ggf. mit Heteroatomen, die vorzugsweise aus Mineralöl oder aus sonstigen Monomeren synthetisiert werden. Gemeinsam ist diesen Polymeren eine überwiegend aus Kohlenstoffatomen bestehende Hauptkette.

Die innere Komponente kann aus einer Chemiefaser, Viskosefaser, Mineralfaser, Glasfaser oder Carbonfaser bestehen. Solche Materialien verfügen über eine hohe Festigkeit und können daher ein textiles Produkt bzw. Flächengebilde mechanisch stabilisieren.

Bevorzugt besteht die äußere Komponente aus einem thermoplastischen Material. Ein thermoplastisches Material ist in der Lage, bei Erhitzung bis zu einer Schmelz- oder Erweichungstemperatur in einen plastischen Zustand überzugehen, und sich dann ggf. mit einer Siegelschicht zu verbinden und gemeinsam mit dieser zu erstarren.

Ein bevorzugtes Merkmal der Erfindung besteht darin, dass der Schmelzpunkt $T_{Si}$ der inneren Komponente größer ist als der Schmelzpunkt $T_{Sa}$ der äußeren Komponente:

$$T_{Si} > T_{Sa}.$$

Diese Maßnahme erlaubt eine Einsiegelung der äußeren Komponente zwischen zwei Siegelschichten, also in eine Siegelnaht, während die innere Komponente dabei ihre Struktur beibehält und also das betreffende textile Produkt bzw. Flächengebilde stabilisiert.

Eine bevorzugte Konstruktionsvorschrift sieht vor, dass die Differenz $\Delta T_S$ zwischen dem Schmelzpunkt $T_{Si}$ der inneren Komponente und dem Schmelzpunkt $T_{Sa}$ der äußeren Komponente gleich oder größer ist als 60 °C:

$$\Delta T_S = T_{Si} - T_{Sa} \geq 60\ °C,$$

vorzugsweise gleich oder größer ist als 80 °C:

$$\Delta T_S = T_{Si} - T_{Sa} \geq 80\ °C,$$

insbesondere gleich oder größer ist als 100 °C:

$$\Delta T_S = T_{Si} - T_{Sa} \geq 100\ °C.$$

Je größer diese Temperaturdifferenz ist, um so unkritischer ist die Herstellung eines damit versehenen Vakuumisolationspaneels, insbesondere im Hinblick auf eine zuverlässige Versiegelung seiner Umhüllungsfolie in unmittelbarer Anwesenheit eines textilen Produktes oder Flächengebildes im Bereich einer oder mehrerer Siegelnähte. Die zulässige Siegeltemperatur $T_{Sz}$ kann dann zwischen den beiden Schmelzpunkten liegen:

$$T_{Si} > T_{Sz} > T_{Sa}.$$

Sie sollte von beiden Schmelzpunkten $T_{Si}$, $T_{Sa}$ jeweils einen gewissen Mindestabstand $\Delta T_{\varepsilon i}$, $\Delta T_{\varepsilon a}$ einhalten:

$$T_{Si} + \Delta T_{\varepsilon i} > T_{Sz} > T_{Sa} + \Delta T_{\varepsilon a},$$

wobei $\Delta T_{\varepsilon i}$, $\Delta T_{\varepsilon a}$ jeweils größer sein sollte als 2 °C, beispielsweise gleich oder größer als 5 °C, vorzugsweise gleich oder größer als 10 °C, insbesondere gleich oder größer als 15 °C.

Durch diese Maßnahme ist gewährleistet, dass einerseits die Versiegelung zwischen zwei Folien oder Folienbereichen vollständig luft-, gas- und dampfdicht ist, und dass andererseits das betreffende textile Produkt oder textile Flächengebilde grundsätzlich seine Struktur während des Siegelvorgangs beibehält.

In diesem Sinne kann der Schmelzpunkt $T_{Sa}$ der äußeren Komponente bei 200 °C oder darunter liegen, vorzugsweise bei 180 °C oder darunter, insbesondere bei 160 °C oder darunter. Natürlich sollte dieser Schmelzpunkt $T_{Sa}$ an den Schmelzpunkt der Siegelschicht angepasst sein, derart, dass bei einer zulässigen Siegeltemperatur $T_{Sz}$ sowohl die Siegelschicht schmilzt als auch die äußere Komponente der Fasern des textilen Produktes oder Flächengebildes. Andererseits sollte angestrebt werden, dass der Schmelzpunkt $T_{Si}$ der inneren Komponente bei 200 °C oder darüber liegt, vorzugsweise bei 220 °C oder darüber, insbesondere bei 240 °C oder darüber. Je nach Material der inneren Komponente kann deren Schmelzpunkt knapp oberhalb dieses Bereichs liegen wie bei manchen Kunststoffen oder auch deutlich darüber wie bei Glas- oder Mineralfasern.

Weitere Vorteile lassen sich dadurch erzielen, dass beide Faser-Komponenten aus Polymeren bestehen, welche wenigstens zwei einander benachbarte Kohlenstoffatome in der Hauptkette aufweisen, welche die eine Einfachbindung miteinander verknüpft sind, wobei jeweils zwei weitere Valenzelektronen dieser beiden Kohlenstoffatome mit je einem Wasserstoffatom verbunden sind. Indem beide Faser-Komponenten zumindest abschnittsweise einander entsprechende Kettensequenzen aufweisen, ist eine innige Verbindung zwischen beiden Substanzen möglich.

Weitere Vorteile lassen sich erzielen, indem die äußere Komponente aus Polyethylen besteht. Hierbei handelt es sich um einen Thermoplast mit einer einfachen Strukturformel und einem vergleichsweise niedrigen Schmelzpunkt, der eine Versiegelung mit einer Siegelschicht erlaubt.

Andererseits ist es möglich, dass die innere Komponente aus Polyethylenterephthalat besteht. Diese Substanz hat einen deutlich höheren Schmelzpunkt als Polyethylen, so dass ihr Schmelzpunkt während eines Siegelvorganges nicht erreicht wird und sie ihre Struktur beibehalten kann.

Der Durchmesser der Fasern kann etwa gleich 100 $\mu$m sein oder kleiner, beispielsweise 50 $\mu$m oder kleiner, vorzugsweise 20 $\mu$m oder weniger, insbesondere 10 $\mu$m oder kleiner. Der Faserdurchmesser wirkt sich auf deren Flexibilität und also zulässige Biegeradien aus. Je kleiner der Faserdurchmesser, um so feiner kann ein derartiges, textiles Filtermaterial ausgebildet sein und seine Aufgabe des Zurückhaltens von Partikeln des Kernmaterials optimal erfüllen.

Als Fasern können Stapelfasern und/oder Filamente verwendet werden. Während Filamente unendlich lange oder zumindest doch sehr lange sind, haben Stapelfasern eine begrenzte Länge, nämlich bevorzugt die Länge eines Stapels.

Es hat sich bewährt, dass die Länge der Fasern gleich 200 mm ist oder kürzer, beispielsweise 150 mm oder kürzer, vorzugsweise 100 mm oder kürzer, insbesondere 80 mm oder kleiner. Die Faserlänge wirkt sich auf den Grad der Verfilzung aus und damit auf den Zusammenhalt des textilen Produktes. Im Gegensatz zu Geweben, Gewirken od. dgl., wofür Filamente besser geeignet sind, eignen sich für die Herstellung von Vliesen oder Vliesstoffen vor allem Stapelfasern mit einer begrenzten Länge.

Das textile Erzeugnis oder das textile Flächengebilde kann ein isotropes Vlies oder Vliesstoff sein, worin die Fasern in keiner herausgehobenen Richtung orientiert sind, sondern wirr angeordnet sind, oder ein orientiertes Vlies oder Vliesstoff, worin die Fasern in einer Richtung orientiert sind, oder ein Kreuzlage-Vlies oder -Vliesstoff, worin die Fasern in zwei, sich kreuzenden Richtungen orientiert sind. Die Orientierung der Fasern innerhalb eines Vlieses hat Auswirkungen auf dessen mechanische Eigenschaften, welche jedoch primär während des Herstellungsverfahrens ohne Bedeutung sind. Hier sollte darauf geachtet werden, dass die mechanische Stabilität für das gewählte Herstellungsverfahren ausreichend ist.

Die Erfindung empfiehlt, dass das textile Erzeugnis oder das textile Flächengebilde ein mechanisch gebildetes (Trocken-) Vlies oder ein daraus gewonnener Vliesstoff ist, oder ein hydrodynamisch gebildetes (Nass-) Vlies oder ein aus einem solchen gewonnener Vliesstoff, oder ein aerodynamisch gebildetes Vlies oder ein solcher Vliesstoff, oder ein elektrostatisch gebildetes Vlies oder ein Vliesstoff aus einem derartigen Vlies. Das Herstellungsverfahren kann dem demit geschaffenen Produkt ggf. vorteilhafte Eigenschaften verleihen.

Die Erfindung erfährt eine vorteilhafte Weiterbildung dahingehend, dass das textile Erzeugnis oder das textile Flächengebilde ein verfestigter Vliesstoff ist, der insbesondere mittels Reib- oder Formschlussbindung oder mittels chemischer oder thermischer Verfahren verfestigt wurde. Die Bindung kann dem fertigen Vliesstoff weitere, vorteilhafte Eigenschaften verleihen.

Dem Erfindungsgedanken entsprechend kann das textile Erzeugnis, insbesondere ein Vlies, und/oder das textile Flächengebilde, insbesondere ein Vliesstoff, zumindest teilweise in wenigstens eine Siegelnaht zwischen Folien(abschnitten) der Umhüllungsfolie eingesiegelt sein. Das bedeutet, dass bei der Herstellung des Vakuumisolationspaneels und insbesondere bei der Positionierung eines zum Zwecke des Zurückhaltens von Partikeln des Kernmaterials eingefügten textilen Produkts oder Flächengebildes dessen Lage relativ zu den Siegelnähten kaum oder gar nicht zu beachten ist.

Schließlich entspricht es der Lehre der Erfindung, dass das textile Erzeugnis, insbesondere ein Vlies, und/oder das textile Flächengebilde, insbesondere ein Vliesstoff, wenigstens eine Fläche des Kerns vollständig bedeckt. Damit kann einerseits die Evakuierung über die gesamte betreffende Fläche erfolgen, so dass infolge eines großen Strömungsquerschnitts vergleichsweise niedrige Strömungsgeschwindigkeiten realisiert werden können, und andererseits muss das textile Erzeugnis oder flächengebilde nicht vor den Siegelnähten abgeschnitten werden, sondern kann sich ohne weiteres in jene hinein erstrecken, wodurch jeglicher Bypass vermieden wird.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    einen Schnitt durch einen erfindungsgemäßen Vakuumdämmkörper mit einem Kern und einem diesen umgebenden, luftdichten Folie, wobei zwischen dem Kern und der Folie ein textiles Erzeugnis oder Flächengebilde eingelegt ist, sowie

Fig. 2    einen Schnitt durch eine Faser des textilen Erzeugnisses oder Flächengebildes nach Fig. 1.

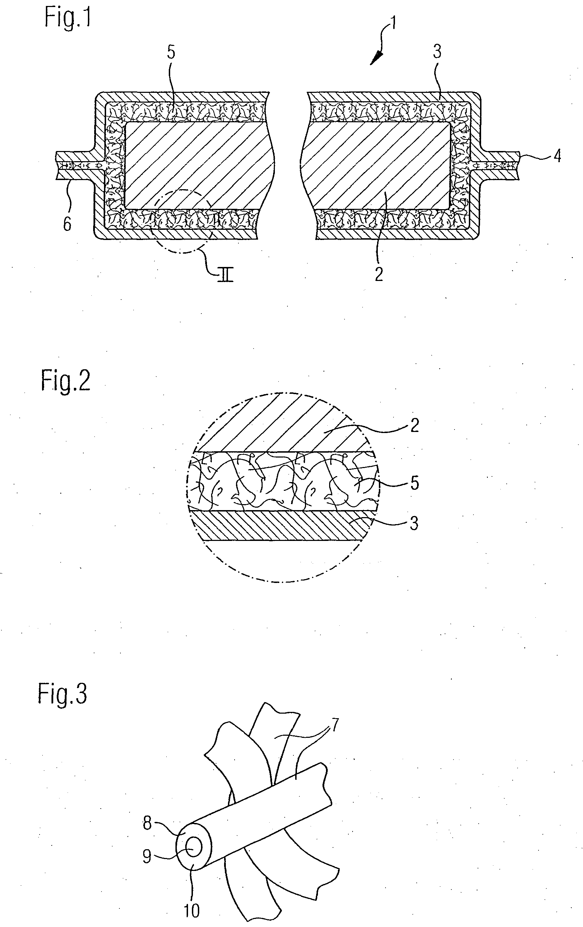

Der in Fig. 1 beispielhaft im Querschnitt dargestellte Wärmedämmkörper 1 hat bevorzugt die Gestalt einer Platte, insbesondere von rechteckiger Grundfläche.

Er erhält diese Gestalt durch Vermittlung seines Kerns 2, der aus einem offenporigen Material bestehen sollte, beispielsweise aus pyrogener Kieselsäure; hierfür sind aber auch andere Materialien geeignet.

Der Kern 2 ist umgeben von einer Hülle 3 aus einem luftundurchlässigen Folienmaterial, einer sogenannten Hochbarrierefolie. Diese besteht aus mehreren Schichten. Auf ein Trägermaterial ist eine dünne Schicht aus Aluminium aufgedampft als eigentliche Barriereschicht. Dies ist mit einer Schutzschicht abgedeckt. An der Unterseite befindet sich eine niedrigschmelzende und damit versiegelbare Schicht aus Polyethylen.

Wie man Fig. 1 entnehmen kann, besteht beispielsweise die Möglichkeit, den Kern 2 zwischen zwei solche Hüllfolienzuschnitte 3 zu legen und die beiden Hüllfolienzuschnitte 3 entlang des Randes 4 des Kerns 2 miteinander zu versiegeln, also zu erhitzen, bis die Siegelschicht in den schmelzflüssigen Zustand übergeht, und dann die beiden Folienlagen 3 mit ihren dann angeschmolzenen Innenseiten aneinanderzupressen, damit diese nach dem Erkalten sozusagen miteinander verschweißt sind.

Nun ist es allerdings notwendig, den Kern vor dem vollständig luftdichten Einsiegeln zu evakuieren, um im Bereich des Kerns 2 ein Vakuum zu erzeugen, welches den eigentlichen, thermisch isolierenden Effekt mit sich bringt.

Bei diesem Evakuierungsvorgang besteht die Gefahr, dass die ausströmende Luft lose Partikel des Kerns mit sich reißt und diese dann beispielsweise im Bereich der zu versiegelnden Bereiche der Hüllfolien 3 zu verlieren. Wenn sich diese Partikel zwischen die zu versiegelnden Folienbereiche legen, ist eine zuverlässige Versiegelung nicht mehr gewährleistet.

Deshalb wird häufig der Kern 2 vor dem Einhüllen in die Hüllfolie 3 in ein flächiges sowie zwar luftdurchlässiges, aber für feste Partikel undurchlässiges Filtermaterial 5 eingewickelt. Als Filtermaterial 5 kann beispielsweise ein Vlies verwendet werden.

Dieses Filtermaterial 5 hält zwar feste Partikel des Kerns 3 von den zu versiegelnden Schichten der Hüllfolie 3 fern. Andererseits besteht jedoch die Gefahr, dass Teile des luftdurchlässigen, aber für feste Partikel undurchlässigen Filtermaterial 5 in einen zu versiegelnden Bereich einer Schweißlasche 6 der Hüllfolie(n) 3 gelangen, wie dies in Fig. 1 dargestellt ist. Dies ist kontraproduktiv, weil dann das Filtermaterial 5 selbst einen vergleichbar nachteiligen Effekt nach sich zieht wie mitgerissene Partikel des Kerns 3, nämlich eine vollflächige Verschweißung der Hüllfolie(n) zu behindern oder gar zu verhindern.

Deshalb ist erfindungsgemäß vorgesehen, ein spezielles Filtermaterial 5 zu verwenden. Wie man der Fig. 2 entnehmen kann, handelt es sich bei dem Filtermaterial 5 um ein aus einzelnen Fasern 7 gebildetes Material. Bevorzugt sind dies Fasern 7 jedoch nicht miteinander verwoben oder auf eine andere, regelmäßige Weise miteinander verflochten. Vielmehr wird dafür ein Vlies bevorzugt, also ein durch eine Art Verfilzung aus den einzelnen Fasern 7 gebildetes Material. Jedenfalls in belüftetem Zustand können diese Fasern 7 das Vlies des Filtermaterials 5 auf eine größere Dicke "aufbauschen" als die eigentliche Hüllfolie 3.

In Fig. 3 sind einige wenige Fasern 7 dieses vliesartigen Filtermaterials 5 zu sehen. Es kann sich hierbei um Stapelfasern und/oder Filamente handeln. An einer Schnittfläche 8 durch eine Faser 7 erkennt man deren inneren Aufbau:

Die Faser 7 selbst besteht aus einer inneren Seele 9 und einem diese außen umgebenden Mantel 10 aus einem anderen Material.

Bevorzugt hat das Material des Mantels 10 einen niedrigeren Schmelzpunkt als das Material der Seele 9, so dass bei einem Versiegelungsvorgang zwar der äußere Mantel 10 schmelzen kann, nicht jedoch die innere Seele 9. Dem (an-) geschmolzenen Mantel obliegt es dann, sich ggf. mit der Siegelschicht der Hüllfolie 3 zu verbinden, falls es Berührungen gibt, d.h., wenn also die Faser 7 in den Bereich einer Siegelschicht der Hülle 3 gelangt ist. Natürlich soll dabei andererseits die Verbindung zu der Seele 9 nicht verloren gehen, d.h., der Mantel 10 soll die Seele 9 mit der Siegelschicht der Hülle 3 verbinden, und zwar im Idealfall ohne dazwischen verbleibende Lücken, durch welche ansonsten Luft hindurchströmen könnte. Im Idealfall erstarrt die geschmolzene Masse anschließend zu einem einheitlichen Gebilde, welches einerseits die Seelen 9 umschließt und andererseits an der Hüllfolie 3 flächig benetzend anliegt.

Dabei ist es vorteilhaft, wenn das Material ds Mantels 10 mit der Siegelschicht der Hüllfolie 3 gute Benetzungseigenschaften pflegt. Mit gutem Erfolg lässt sich dies erreichen, wenn der Mantel 10 einer Faser 7 aus dem selben Material besteht wie die Siegelschicht der Hüllfolie 3.

Wenn für letztere demnach Polyethylen Verwendung findet, so sieht die Erfindung vor, auch für den Mantel 10 der Fasern 7 des Filtermaterials 5 Polyethylen (Summenformel des Monomers bzw. der Wiederholeinheit des Polymers: $C_2H_4$) zu verwenden. Damit ist ein vollständiges Zusammenfließen im geschmolzenen Zustand gewährleistet; es gibt in der erstarrten Substanz keine Trennschichten mehr. Polyethylen gibt es je nach Vernetzungsart und - grad in vreschiedenen Modifikationen: PE-LLD (oder LLDPE; "linear low density") und PE-LD (oder LDPE; "low density"), PE-HD (oder HDPE; "high density"), PE-HMW ("high molecular weight") und PE-UHMW ("ultra high molecular weight"). Von diesen erscheinen die Modifikationen mit niedriger Dichte, also PE-LLD und PE-LD, als weniger geeignet, da diese vergleichsweise niedrige Schmelzpunkte haben (PE-LLD) oder chemisch nicht ausreichend beständig sind (PE-LD). In Betracht kommt daher vor allem PE-HD, welches chemisch beständig ist und einen Schmelzpunkt im Bereich von 130 bis 140 °C aufweist. PE-HD verdankt seine Eigenschaften nur schwach verzweigten Polymerketten.

Die Seele 9 sollte einen deutlich höheren Schmelzpunkt haben als der Mantel 10, beispielsweise einen um wenigstens 25 °C höheren Schmelzpunkt, vorzugsweise einen um wenigstens 50 °C höheren Schmelzpunkt, insbesondere einen um wenigstens 75 °C höheren Schmelzpunkt, und andererseits auch mit dem geschmolzenen Material des Mantels 10 in benetzendem Kontakt bleiben.

Diese Eigenschaften lassen sich bei einem Mantel 10 aus Polyethylen am besten durch ein zwar anderes, aber chemisch verwandtes Material erzielen, beispielsweise durch Polyethylenterephthalat (Summenformel des Monomers bzw. der Wiederholeinheit des Polymers: $C_{10}H_8O_4$). Der Schmelzpunkt von Polyethylenterephthalat liegt bei mehr als 250 °C und ist damit deutlich höher als der von Polyethylen.

Ein vorteilhafter Aspekt der Erfindung ergibt sich dadurch, dass die Summenformel des Monomers oder der Wiederholeinheit des Polymers des Materials für den Mantel 10 der Faser 7 mit der Summenformel des Monomers oder der Wiederholeinheit des Polymers des Materials der Siegelschicht der Hüllfolie 3 übereinstimmt.

Ein vorteilhafter Nebeneffekt der Erfindung kann darin bestehen, dass sich bei einer Erhitzung des Vakuumisolationspaneels in evakuiertem Zustand - beispielsweise in einem Ofen - die Fasern 7 des Filtermaterials 5 großflächig mit der Siegelschicht an der Innenseite der Hüllfolie 3 verbinden können. Dadurch wird die mechansiche Stabilität der Hüllfolie verbessert, diese kann also weniger leicht reissen. Somit kann der Entstehung von Mikrorissen in der Barriereschicht vorgebeugt werden.

Bezugszeichenliste

1     Wärmedämmkörper
2     Kern
3     Hülle
4     Rand
5     Filtermaterial
6     Schweißlasche
7     Faser
8     Schnittfläche
9     Seele
10    Mantel

**Patentansprüche**

1. Folienumhüllter Vakuumdämmkörper (1), umfassend einen Kern (2) und eine den Kern (2) umgebende, aus mehreren Schichten bestehende luftundurchlässige Hüllfolie (3), wobei auf einem Trägermaterial eine dünne Schicht aus Aluminium als Barriereschicht aufgedampft ist, welche mit einer Schutzschicht abgedeckt ist, und sich auf der Unterseite der Trägerschicht eine niedrigschmelzende Siegelschicht aus Polyethylen befindet, wobei zwischen dem Kern (2) und der Hüllfolie (3) zumindest bereichsweise ein textiles Erzeugnis (5), insbesondere ein Vlies, und/oder ein textiles Flächengebilde (5), insbesondere ein Vliesstoff, eingefügt ist, wobei die Fasern (7) des textilen Erzeugnisses (5) und/oder des textilen Flächengebildes (5) wenigstens zwei Komponenten (9,10) aufweisen, welche aus unterschiedlichen Materialien bestehen, aber miteinander verbunden sind, und wobei die beiden Komponenten (9,10) der Fasern (7) konzentrisch ineinander angeordnet sind, nämlich in Form einer inneren Seele (9) einerseits und einem diese außen umgebenden Mantel (10) aus einem Polymer-Material andererseits, **dadurch gekennzeichnet, dass** die Summenformel des Monomers oder der Wiederholeinheit des Polymer-Materials für den Mantel (10) der Faser (7) mit der Summenformel des Monomers oder der Wiederholeinheit des Polymer-Materials der Siegelschicht der Hüllfolie (3) übereinstimmt.

2. Folienumhüllter Vakuumdämmkörper (1) nach Anspruch 1, **dadurch gekennzeichnet, dass** eine oder beide Komponenten (9,10) aus einem natürlichen oder synthetischen Polymer bestehen.

3. Folienumhüllter Vakuumdämmkörper (1) nach einem der vorhergehenden Ansprüche, **dadurch gekennzeichnet, dass** die äußere Komponente (10) aus einem thermoplastischen Material besteht.

4. Folienumhüllter Vakuumdämmkörper (1) nach einem der vorhergehenden. Ansprüche, **dadurch gekennzeichnet, dass** die innere Komponente (9) aus einer Chemiefaser, Viskosefaser, Mineralfaser, Glasfaser oder Carbonfaser besteht.

5. Folienumhüllter Vakuumdämmkörper (1) nach einem der vorhergehenden Ansprüche, **dadurch gekennzeichnet, dass** der Schmelzpunkt $T_{Si}$ der inneren Komponente (9) größer ist als der Schmelzpunkt $T_{Sa}$ der äußeren Komponente (10):

$$T_{Si} > T_{Sa}.$$

**6.** Folienumhüllter Vakuumdämmkörper (1) nach einem der vorhergehenden Ansprüche, **dadurch gekennzeichnet, dass** die Differenz $\Delta T_S$ zwischen dem Schmelzpunkt $T_{Si}$ der inneren Komponente (9) und dem Schmelzpunkt $T_{Sa}$ der äußeren Komponente (10) gleich oder größer ist als 60 °C:

$$\Delta T_S = T_{Si} - T_{Sa} \geq 60 \text{ °C,}$$

vorzugsweise gleich oder größer ist als 80 °C:

$$\Delta T_S = T_{Si} - T_{Sa} \geq 80 \text{ °C,}$$

insbesondere gleich oder größer ist als 100 °C:

$$\Delta T_S = T_{Si} - T_{Sa} \geq 100 \text{ °C.}$$

**7.** Folienumhüllter Vakuumdämmkörper (1) nach einem der vorhergehenden Ansprüche, **dadurch gekennzeichnet, dass** der Schmelzpunkt $T_{Sa}$ der äußeren Komponente (10) bei 200 °C oder darunter liegt, vorzugsweise bei 180 °C oder darunter, insbesondere bei 160 °C oder darunter.

**8.** Folienumhüllter Vakuumdämmkörper (1) nach einem der vorhergehenden Ansprüche, **dadurch gekennzeichnet, dass** der Schmelzpunkt $T_{Si}$ der inneren Komponente (9) bei 200 °C oder darüber liegt, vorzugsweise bei 220 °C oder darüber, insbesondere bei 240 °C oder darüber.

**9.** Folienumhüllter Vakuumdämmkörper (1) nach einem der vorhergehenden Ansprüche, **dadurch gekennzeichnet, dass** die äußere Komponente (10) aus Polyethylen besteht.

**10.** Folienumhüllter Vakuumdämmkörper (1) nach einem der vorhergehenden Ansprüche, **dadurch gekennzeichnet, dass** die innere Komponente (9) aus Polyethylenterephthalat besteht.

**11.** Folienumhüllter Vakuumdämmkörper (1) nach einem der vorhergehenden Ansprüche, **dadurch gekennzeichnet, dass** die Fasern (7)

a) Stapelfasern und/oder Filamente sind; und/oder
b) Durchmesser von 100 μm aufweisen oder kleiner, beispielsweise 50 μm oder kleiner, vorzugsweise 20 μm oder weniger, insbesondere 10 μm oder kleiner; und/oder

c) Längen von 200 mm aufweisen oder kürzer, beispielsweise 150 mm oder kürzer, vorzugsweise 100 mm oder kürzer, insbesondere 80 mm oder kleiner.

**12.** Folienumhüllter Vakuumdämmkörper (1) nach einem der vorhergehenden Ansprüche, **dadurch gekennzeichnet, dass** das textile Erzeugnis (5) oder das textile Flächengebilde (5) ein isotropes Vlies oder Vliesstoff ist, worin die Fasern (7) in keiner herausgehobenen Richtung orientiert sind, sondern wirr angeordnet sind, oder ein orientiertes Vlies oder Vliesstoff, worin die Fasern (7) in einer Richtung orientiert sind, oder ein Kreuzlage-Vlies oder -Vliesstoff, worin die Fasern (7) in zwei sich kreuzenden Richtungen orientiert sind.

**13.** Folienumhüllter Vakuumdämmkörper (1) nach einem der vorhergehenden Ansprüche, **dadurch gekennzeichnet, dass** das textile Erzeugnis (5) oder das textile Flächengebilde (5) ein mechanisch gebildetes (Trocken-) Vlies oder Vliesstoff ist oder ein hydrodynamisch gebildetes (Nass-) Vlies oder Vliesstoff oder ein aerodynamisch gebildetes, Vlies oder Vliesstoff oder ein elektrostatisch gebildetes Vlies oder Vliesstoff.

**14.** Folienumhüllter Vakuumdämmkörper (1) nach einem der vorhergehenden Ansprüche, **dadurch gekennzeichnet, dass** das textile Erzeugnis (5) oder das textile Flächengebilde (5) ein verfestigter Vliesstoff ist, insbesondere mittels Reib- oder Formschlussbindung oder mittels chemischer oder thermischer Verfahren.

**15.** Folienumhüllter Vakuumdämmkörper (1) nach einem der vorhergehenden Ansprüche, **dadurch gekennzeichnet, dass** das textile Erzeugnis (5), insbesondere ein Vlies, und/oder das textile Flächengebilde (5), insbesondere ein Vliesstoff,

a) wenigstens eine Fläche des Kerns (2) vollständig bedeckt; und/oder
b) zumindest teilweise in wenigstens eine Siegelnaht (6) zwischen Folien(abschnitten) (4) der Umhüllungsfolie (3) eingesiegelt ist.

## Claims

**1.** Film-encapsulated vacuum insulation body (1), comprising a core (2) and an air-tight enveloping foil (3) consisting of several layers and surrounding the core (2), wherein a thin layer made of aluminum is vapor deposited onto a substrate as a barrier layer and is covered by a protective layer, and wherein a low-melting sealing layer made of polyethylene is located at the bottom side of the substrate layer, wherein a textile product (5), especially a fleece, and/or a textile surface object (5), especially a non-woven fabric, is inserted between the core (2) and the envelopoing foil (3) at least in certain areas, wherein the filaments (7) of the textile product (5) and/or of the textile surface object (5) have at least two components (9,10), which consist of different materials, but are bound together, and wherein the two components (9,10) of the filaments (7) are arranged concentric to each other, namely in the form of an inner core (9) on the one hand and a sheath (10) made of polymer material surrounding the core at the outside on the other hand, **characterized in that** the molecular formula of the monomer or of the repeating unit of the polymer material of the sheath (10) of the filament (7) coincides with the molecular formula of the monomer or of the repeating unit of the polymer material of the sealing layer of the enveloping foil (3).

2. Film-encapsulated vacuum insulation body (1) according to claim 1, **characterized in that** one or both components (9,10) consist of a natural or synthetic polymer.

3. Film-encapsulated vacuum insulation body (1) according to one of the preceding claims, **characterized in that** the outer component (10) consists of a thermoplastic material.

4. Film-encapsulated vacuum insulation body (1) according to one of the preceding claims, **characterized in that** the inner component (9) consists of a chemical fiber, a viscose fiber, a mineral fiber, a glass fiber or of a carbon fiber.

5. Film-encapsulated vacuum insulation body (1) according to one of the preceding claims, **characterized in that** the melting point $T_{Si}$ of the inner component (9) is higher than the melting point $T_{Sa}$ of the outer component (10):

$$T_{Si} > T_{Sa}.$$

6. Film-encapsulated vacuum insulation body (1) according to one of the preceding claims, **characterized in that** the difference $\Delta T_S$ between the melting point $T_{Si}$ of the inner component (9) and the melting point $T_{Sa}$ of the outer component (10) is equal to or greater than 60 °C:

$$\Delta T_S = T_{Si} - T_{Sa} \geq 60 \,°C,$$

preferably equal to or greater than 80 °C:

$$\Delta T_S = T_{Si} - T_{Sa} \geq 80 \,°C,$$

espcially equal to or greater than 100 °C:

$$\Delta T_S = T_{Si} - T_{Sa} \geq 100 \,°C.$$

7. Film-encapsulated vacuum insulation body (1) according to one of the preceding claims, **characterized in that** the melting point $T_{Sa}$ of the outer component (10) is at 200 °C or beneath, preferably at 180 °C or beneath, especially at 160 °C or beneath.

8. Film-encapsulated vacuum insulation body (1) according to one of the preceding claims, **characterized in that** the melting point $T_{Si}$ of the inner component (9) is at 200 °C or beyond, preferably at 220 °C or beyond, especially at 240 °C or beyond.

9. Film-encapsulated vacuum insulation body (1) according to one of the preceding claims, **characterized in that** the outer component (10) is made from polyethylene.

10. Film-encapsulated vacuum insulation body (1) according to one of the preceding claims, **characterized in that** the inner component (9) is made of polyethylene terephthalate.

11. Film-encapsulated vacuum insulation body (1) according to one of the preceding claims, **characterized in that** the filaments (7)

a) are staple fibers and/or textile filaments; and/or
b) have diameters of 100 μm or less, for example of 50 μm or less, preferably of 20 μm or less, especially of 10 μm or less; and/or
c) have lengths of 200 mm or shorter, for example of 150 mm or shorter, preferably of 100 mm or shorter, especially of 80 mm or shorter.

12. Film-encapsulated vacuum insulation body (1) according to one of the preceding claims, **character-**

**ized in that** the textile product (5) or the textile surface object (5) is an isotropic fleece or non-woven fabric, wherein the filaments (7) are not oriented in any prominent direction, but are tangled, or is an oriented fleece or non-woven fabric, wherein the filaments (7) are oriented in one direction, or is a cross-layer fleece or a cross-layer nonwoven fabric, wherein the filaments (7) are oriented in two directions crossing each other.

13. Film-encapsulated vacuum insulation body (1) according to one of the preceding claims, **characterized in that** the textile product (5) or the textil surface object (5) is a mechanically formed (dry) fleece or non-woven fabric, or a hydro-dynamically formed (wet) fleece or non-woven fabric, or an aero-dynamically formed fleece or non-woven fabric, or an electrostatically formed fleece or non-woven fabric.

14. Film-encapsulated vacuum insulation body (1) according to one of the preceding claims, **characterized in that** the textile product (5) or the textil surface object (5) is a consolidated non-woven fabric, especially by means of a frictional or tight-fit weave or by use of chemical or thermical procedures.

15. Film-encapsulated vacuum insulation body (1) according to one of the preceding claims, **characterized in that** the textile product (5), especially a fleece, and/or the textile surface object (5), especially a non-woven fabric,

  a) covers at least an area of the core (2) completely; and/or
  b) is sealed at least partially into at least one sealing seam (6) between foil (areas) (4) of the enveloping foil (3).

## Revendications

1. Corps d'isolation sous vide entouré d'un film (1), comportant une partie centrale (2) et un film enveloppant (3) imperméable à l'air constitué de plusieurs couches entourant la partie centrale (2), en ce qu'une couche mince en aluminium est métallisée sous vide comme couche barrière sur un substrat, ladite couche est recouverte d'une couche protectrice, et une couche de scellement à bas point de fusion en polyéthylène se trouve sur la face inférieure du substrat, en ce qu'un produit textile (5), en particulier un non-tissé, et/ou un tissu (5), en particulier un tissu non tissé, est inséré au moins partiellement entre la partie centrale (2) et le film enveloppant (3), en ce que les fibres (7) du produit textile (5) et/ou du tissu (5) comportent au moins deux composants (9, 10) qui sont constitués de matériaux différents, mais qui sont reliés l'un à l'autre, et en ce que les deux composants (9, 10) des fibres (7) sont disposés l'un dans l'autre de manière concentrique, à savoir sous forme d'âme intérieure (9) d'une part et d'autre part d'enveloppe (10) en matériau polymère entourant extérieurement celle-ci, **caractérisé en ce que** la formule brute du monomère ou de l'unité de répétition du matériau polymère pour l'enveloppe (10) des fibres (7) concorde avec la formule brute du monomère ou de l'unité de répétition du matériau polymère de la couche de scellement du film enveloppant (3).

2. Corps d'isolation sous vide entouré d'un film (1) selon la revendication 1, **caractérisé en ce qu'**un ou les deux composants (9, 10) sont constitués d'un polymère naturel ou synthétique.

3. Corps d'isolation sous vide entouré d'un film (1) selon l'une des revendications précédentes, **caractérisé en ce que** le composant externe (10) est constitué d'un matériau thermoplastique.

4. Corps d'isolation sous vide entouré d'un film (1) selon l'une des revendications précédentes, **caractérisé en ce que** le composant interne (9) est constitué d'une fibre synthétique, d'une fibre de viscose, d'une fibre minérale, d'une fibre de verre ou d'une fibre de carbone.

5. Corps d'isolation sous vide entouré d'un film (1) selon l'une des revendications précédentes, **caractérisé en ce que** le point de fusion $T_{Si}$ du composant interne (9) est supérieur au point de fusion $T_{Sa}$ du composant externe (10) :

$$T_{Si} > T_{Sa}.$$

6. Corps d'isolation sous vide entouré d'un film (1) selon l'une des revendications précédentes, **caractérisé en ce que** la différence $\Delta T_s$ entre le point de fusion $T_{Si}$ du composant interne (9) et le point de fusion $T_{Sa}$ du composant externe (10) est égale ou supérieure à 60 °C :

$$\Delta T_S = T_{Si} - T_{Sa} \geq 60\ °C,$$

de préférence égale ou supérieure à 80 °C :

$$\Delta T_S = T_{Si} - T_{Sa} \geq 80\ °C,$$

en particulier égale ou supérieure à 100 °C :

$$\Delta T_S = T_{Si} - T_{Sa} \geq 100 \text{ °C}.$$

7. Corps d'isolation sous vide entouré d'un film (1) selon l'une des revendications précédentes, **caractérisé en ce que** le point de fusion $T_{Sa}$ du composant externe (10) est de l'ordre de 200 °C ou inférieur, de préférence de l'ordre de 180 °C ou inférieur, en particulier de l'ordre de 160 °C ou inférieur.

8. Corps d'isolation sous vide entouré d'un film (1) selon l'une des revendications précédentes, **caractérisé en ce que** le point de fusion $T_{Si}$ du composant interne (9) est de l'ordre de 200 °C ou supérieur, de préférence de l'ordre de 220 °C ou supérieur, en particulier dé l'ordre de 240 °C ou supérieur.

9. Corps d'isolation sous vide entouré d'un film (1) selon l'une des revendications précédentes, **caractérisé en ce que** le composant externe (10) est constitué de polyéthylène.

10. Corps d'isolation sous vide entouré d'un film (1) selon l'une des revendications précédentes, **caractérisé en ce que** le composant interne (9) est constitué de polytéréphtalate d'éthylène.

11. Corps d'isolation sous vide entouré d'un film (1) selon l'une des revendications précédentes, **caractérisé en ce que** les fibres (7)

   a) sont de la verranne et/ou des filaments ; et/ou
   b) présentent un diamètre de 100 $\mu$m ou inférieur, par exemple 50 $\mu$m ou inférieur, de préférence 20 $\mu$m ou moins, en particulier 10 $\mu$m ou inférieur ; et/ou
   c) présentent des longueurs de 200 mm ou inférieures, par exemple 150 mm ou inférieures, de préférence 100 mm ou inférieures, en particulier 80 mm ou inférieures.

12. Corps d'isolation sous vide entouré d'un film (1) selon l'une des revendications précédentes, **caractérisé en ce que** le produit textile (5) ou le tissu (5) est un non-tissé isotrope ou tissu non tissé, dans lequel les fibres (7) ne sont pas orientées dans une direction particulière, mais sont disposées de manière emmêlée, ou un non-tissé ou tissu non tissé orienté, dans lequel les fibres (7) sont orientées dans une direction, ou un non-tissé ou tissu non tissé de conception croisée, dans lequel les fibres (7) sont orientés dans deux directions qui se croisent.

13. Corps d'isolation sous vide entouré d'un film (1) selon l'une des revendications précédentes, **caractérisé en ce que** le produit textile (5) ou le tissu (5) est un non-tissé (sec) ou un tissu non tissé formé mécaniquement ou un non-tissé (humide) ou un tissu non tissé formé de manière hydrodynamique ou un non-tissé ou tissu non tissé formé de manière aérodynamique ou un non-tissé ou tissu non tissé formé de manière électrostatique.

14. Corps d'isolation sous vide entouré d'un film (1) selon l'une des revendications précédentes, **caractérisé en ce que** le produit textile (5) ou le tissu (5) est un tissu non tissé consolidé, en particulier au moyen d'une liaison réalisée par friction ou mécanique ou au moyen d'un procédé chimique ou thermique.

15. Corps d'isolation sous vide entouré d'un film (1) selon l'une des revendications précédentes, **caractérisé en ce que** le produit textile (5), en particulier un non-tissé, et/ou le tissu (5), en particulier un tissu non tissé,

   a) recouvre complètement au moins une surface de la partie centrale (2) ; et/ou
   b) est scellé au moins partiellement dans au moins une couture scellée (6) entre des (segments) de film (4) du film enveloppant (3).

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080095970 A1